# EUROPEAN PATENT APPLICATION

(11) **EP 2 138 938 A1**
(43) Date of publication of application: **30.12.2009**
(21) Application number: 07720444.4
(22) Date of filing: 16.03.2007
(51) Int. Cl.: G06F 17/00

(54) **PRODUCING METHOD AND PRODUCING SYSTEM FOR LOADING DIGITAL CONTENTS INTO A PLURALITY OF MEMORY CARDS**

(71) Applicant: Lin, Hui, Taiwan (CN)
(72) Inventor: Lin, Hui, Taiwan (CN)
(74) Representative: Lang, Christian
(86) International application number: PCT/CN2007/000867
(87) International publication number: WO 2008/113204

(57) **Abstract**

A method for writing digital contents to a plurality of storage card by using a main console comprises the following steps of: placing a storage card to a respective one of a plurality of card writing devices; writing digital contents to a storage card through a Hub by using a main console; a plurality of cards can be recorded by serially connection or parallel connection so as to increase the writing speed; and placing the storage cards into card readers; and whether the process of writing digital contents is successful being displayed. A system for the same is also included.

## Description

### FIELD OF THE INVENTION

The present invention relates to method for writing digital contents to a plurality of storage cards and the system for the same.

### BACKGROUND OF THE INVENTION

Due to the progress of computers and digital technologies, many contents of creations (such as movies, or music, etc.) are transferred into the compression files which are then burnt to CDs, DVDS, and other carriers to provide to consumers. Other than movies and music, the contents also include speeches, teachings, operas, etc. All these are called as digital contents.

Besides, other than CDs, DVDs, SD card storage devices are frequently used as A / V carriers. To have convenience in carrying, the contents of CD, DVDs are stored to SD storage cards to be played in MP3s. However this causes a waste in storage resources.

Since SD and other storage cards are convenient to users, and can be duplicated easily, it is beneficial to storage the contents initially into SD cards as the contents are markedly sold so as to prevent the usage of CDs and DVDs. Furthermore, the contents are encrypted and decrypted to prevent the danger of duplication of digital data.

### SUMMARY OF THE INVENTION

The object of the present invention is to provide a method for writing digital contents to a plurality of storage cards by using a main console according to the present invention comprises the following steps of: placing a storage card to a respective one of a plurality of card writing devices; writing digital contents to a storage card through a Hub by using a main console; a plurality of cards can be recorded by serial connection or parallel connection so as to increase the writing speed; and placing the storage cards into card readers; and displaying whether the process of writing digital contents is successful.

The main console is connected to a plurality of storage cards in parallel or in serial through a Hub for downloading digital contents to the storage cards. The downloading of the main console is performed with an encryption operation. A TCP / IP communication protocol is used in network connection.

Another object of the present invention is to provide a system for writing digital contents to storage cards comprising: a main console; a hub; a computer integration and reading system connected to the hub; a card writing assembly including a card writing device and a probe; one end of the probe being connected to the storage card in the card writing device; and another end of the probe being connected to a port of the main console; a card reader connected to the Hub; the storage card 313 can be inserted into the card reader and is connected to a joint of the port of the main console; the storage card being also coupled to the computer integration and reading system in the main console for testing.

The port may be an RS232 port. The card reader may be connected to the hub in parallel. The card reader may be connected to the hub in serial. In serial connection, a transmission structure may be used and a servomotor may be connected to the transmission structure. In serial connection, a transmission structure may be used and a stepping motor may be connected to the transmission structure. The main console may be connected to a SD card transmission device through an RS422 port.

The various objects and advantages of the present invention will be more readily understood from the following detailed description when read in conjunction with the appended drawing.

### BRIEF DESCRIPTION OF THE DRAWINGS

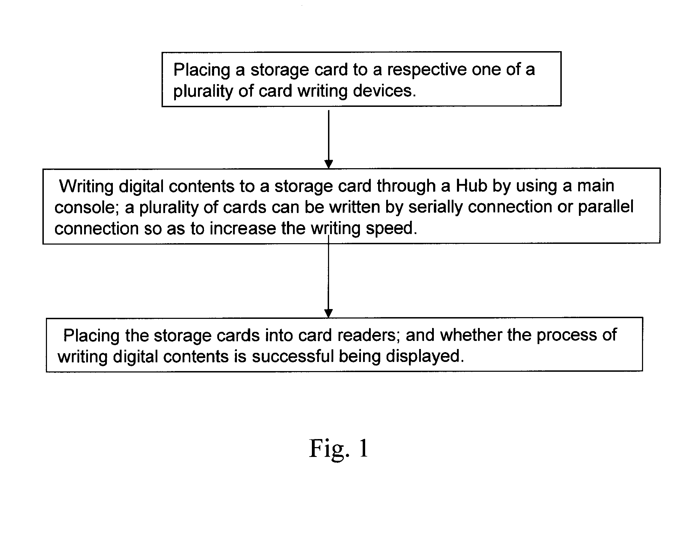

Fig. 1 shows the block diagram about the method of the present invention.
Fig. 2 is a structure in the first embodiment of the present invention.
Fig. 3 is a structure in the second embodiment of the present invention.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

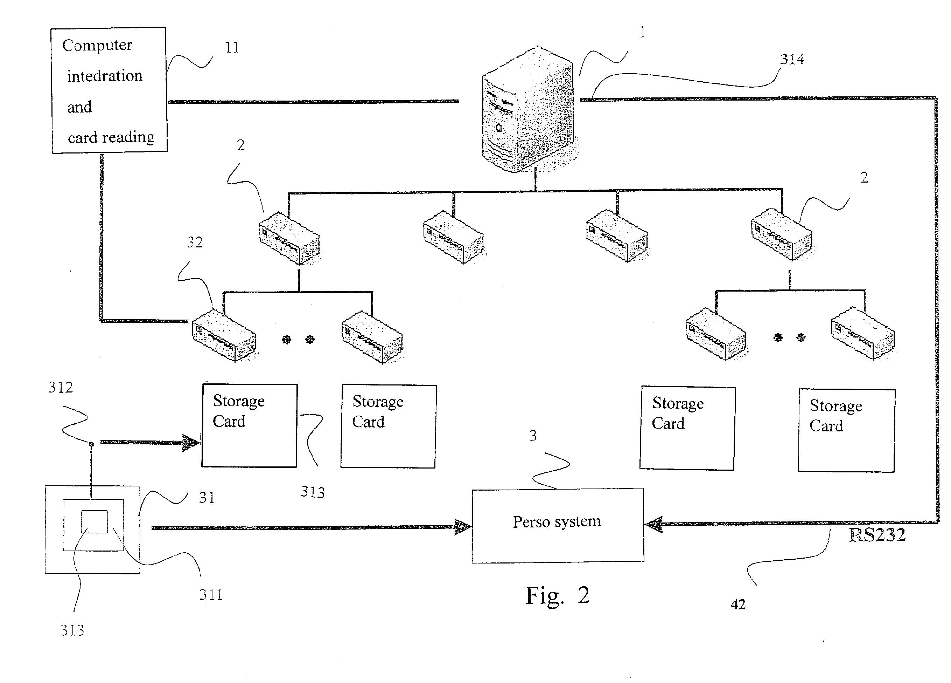

The method for writing digital contents to a plurality of storage cards by using a main console according to the present invention comprises the following steps of:
A. Placing a storage card to a respective one of a plurality of card writing device.
   Practically, 32 pieces of SD cards are placed into card slots. Then a 9 pin probe is driven to contact with a respective SD card on a fixture of the card writing device. Each 9 pin probe is connected to a joint of a 9 pin joint.
B. Writing digital contents to a storage card through a Hub by using a main console. A plurality of cards can be written by serially connection or parallel connection so as to increase the writing speed. Meanwhile the contents can be encrypted by using a HSM (Host Security Module). The network connection is by using TCP / IP communication protocol. For the parallel connection, a plurality of card readers is connected to the Hub 2 (referring to Fig. 2). The card readers 32 read the digital contents from the main console through the Hub 2. For serial connection, only one card reader 32A is serially connected to the Hub 2A. The card reader 32A receives the digital contents from the main console through the Hub 2A.
C. Placing the storage card into the card reader and performing PC Perso process. Furthermore, it is displayed whether the process of writing digital contents is successful.

Practically, each 9 pin RS232 is connected to a SD card. 32 pieces of SD cards are placed into 32 SD card readers to perform PC Perso process. Whether the Perso is successful is displayed.

Referring to Fig. 2, the system of the present invention is illustrated.

The system for writing digital contents to storage cards based on the present invention has the following elements.

A main console 1 is included.

A hub 2 is also included;

A computer integration and reading system (such as a Perso system) 3 is connected to the Hub;

A card writing assembly 31 includes a card writing device 311 and a probe 312. One end of the probe 312 is formed with a state to be connected to the storage card 313 in the card writing device 311. One end of the Perso 3 is connected to the transformation port 314 of the computer 1 through a RS232 port 42.

A card reader 32 is connected to the Hub 2 in parallel or serially (in Fig. 2, a parallel connection example is illustrated). The storage card 313 can be inserted into the card reader and is connected to a joint of the port 314. The storage card 313 is also coupled to the Perso software 11 in the main console 1 for testing.

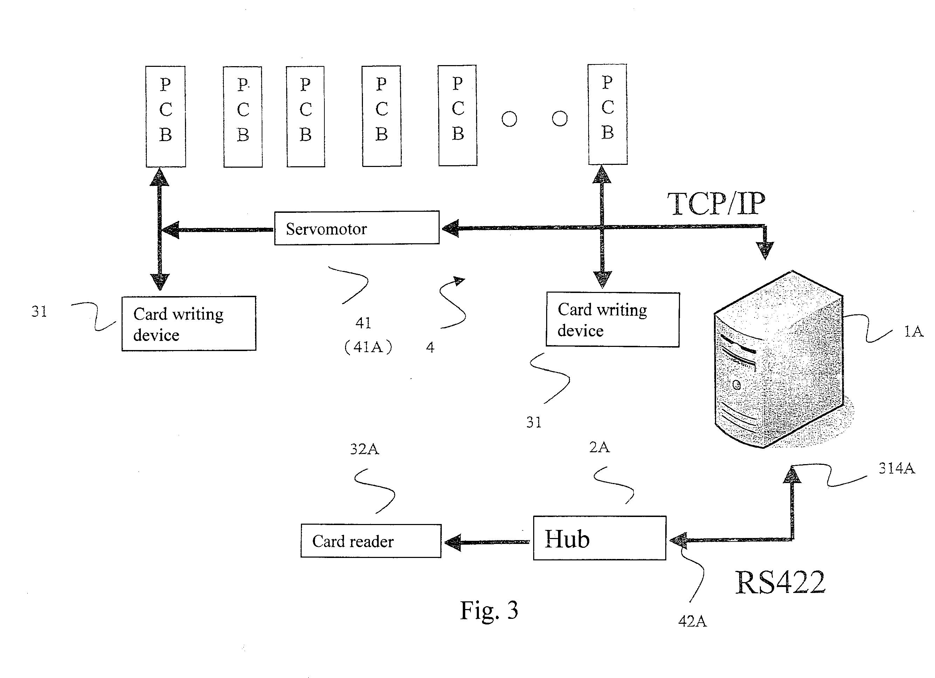

With referring to Fig. 3, the quantification making system in another embodiment of the present invention is illustrated. A card writing device 21 is connected to a transmission system. A servomotor 41 or a step motor 41A is connected to the transmission system so as to form with a serial auto-transmission structure. The main console 1A is connected to the transmission device 4 by using RS232 port or other port. A card reader 32A is connected to a Hub 2A. The Hub 2A is connected to the main console 1A by a transmission line with one end being a port 31 of RS 232 and another port thereof is a port 314 as illustrated in Fig. 3. By the structure of this the present invention, 32 SD cards can download data simultaneously. The average moving speed of the SD card is 5m / sec. with a precision of ±0. 2 mm.

The present invention is thus described; it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A method for writing digital contents to a plurality of storage cards comprises the following steps of:
A. placing a storage card to a respective one of a plurality of card writing devices;
B. writing digital contents to a storage card through a Hub by using a main console; a plurality of cards can be written by serially connection or parallel connection so as to increase the writing speed; and
C. placing the storage cards into card readers; and displaying whether the process of writing digital contents is successful.

2. The method of claim 1, wherein the main console is connected to a plurality of storage cards in parallel through a Hub for downloading digital contents to the storage cards.

3. The method of claim 1, wherein the main console is connected to a plurality of storage cards in serial through a Hub for downloading digital contents to the storage cards.

4. The method of claim 1, wherein the downloading of the main console is performed with an encryption operation.

5. The method of claim 2, wherein a TCP / IP communication protocol is used in network connection.

6. A system for writing digital contents to storage cards comprising:
a main console;
a hub;
a computer integration and reading system connected to the hub;
a card writing assembly including a card writing device and a probe; one end of the probe being connected to the storage card in the card writing device; and another end of the probe being connected to a port of the main console; and
a card reader connected to the Hub; the storage card can be inserted into the card reader and being connected to a joint of the port of the main console; the storage card being also coupled to the computer integration and reading system in the main console for testing.

7. The system of claim 6, wherein the port is an RS232 port.

8. The system of claim 6, wherein the card reader is connected to the hub in parallel.

9. The system of claim 6, wherein the card reader is connected to the hub in serial.

10. The system of claim 9, wherein in serial connection, a transmission structure is used and a servomotor is connected to the transmission structure.

11. The system of claim 9, wherein in serial connection, a transmission structure is used and a stepping motor is connected to the transmission structure.

12. The system of claim 9, wherein the main console is connected to an SD card transmission device through an RS422 port.
